# EUROPEAN PATENT APPLICATION

(11) **EP 2 348 781 A1**
(43) Date of publication of application: **27.07.2011**
(21) Application number: 09820612.1
(22) Date of filing: 14.10.2009
(51) Int. Cl.: H04W 72/10, H04W 28/02

(54) **WIRELESS COMMUNICATION SYSTEM AND HOST NODE**

(30) Priority: 14.10.2008 JP 2008265740
(71) Applicant: NTT DOCOMO, INC., Chiyoda-ku Tokyo 100-6150 (JP)
(72) Inventor: HAYASHI, Takahiro c/o NTT DOCOMO, INC. Int.Prop.Dept., Chiyoda-ku, Tokyo 100-6150 (JP); YASUDA, Yoshiyuki c/o NTT DOCOMO, INC. Int.Prop.Dept., Chiyoda-ku, Tokyo 100-6150 (JP); SUWA, Yuuichi c/o NTT DOCOMO, INC. Int.Prop.Dept., Chiyoda-ku, Tokyo 100-6150 (JP); KATAYAMA, Kenichi c/o NTT DOCOMO, INC. Int.Prop.Dept., Chiyoda-ku, Tokyo 100-6150 (JP)
(74) Representative: HOFFMANN EITLE
(86) International application number: PCT/JP2009/067813
(87) International publication number: WO 2010/044434

(57) **Abstract**

A radio communication system provides a first call type in which a radio resource is allocated to a call in time division and a second call type in which the radio resource is allocated according to a transmission rate. The radio communication system includes a measurement unit (42) measuring a usage result of the first call type and a usage result of the second call type; and a setting unit (44) setting a first usage result priority level as a priority level of the first call type based on the usage result of the first call type upon receipt of the first call type and setting a second usage result priority level as a priority level of the second call type based on the usage result of the second call type upon receipt of the second call type. The first usage result priority level is applied independently of a congestion state of a radio communication section. The second usage result priority level is applied according to the congestion state of the radio communication section.

## Description

### TECHNICAL FIELD

The present invention relates to a radio communication system which provides a first call type having a priority level and a second call type having no priority level and to an upper node.

### BACKGROUND ART

There has been conventionally known a technique of controlling radio resource allocation according to a priority level (for example, a "priority class") set for a call. Generally, the priority level for a call is set in a fixed manner based on a subscription type or the like.

For example, in a call type (hereinafter, a first call type) in which a radio resource is allocated in time division, the control of the radio resource allocation is a control of the order of allocating time slots to calls (the order of scheduling). The first call type is a call for, for example, HSDPA (High Speed Downlink Packet Access) or HSUPA (High Speed Uplink Packet Access).

In contrast, in a call type (hereinafter, a second call type) in which a radio resource is allocated according to a transmission rate, the control of the radio resource allocation is a control of the transmission rate (allocated transmission rate) which changes according to the radio resource allocation. The second call type is a call for, for example, R99 (Release 99).

Note that the priority level for a call is notified to a radio base station by an upper node thereof such as a radio network controller or a switch station.

Specifically, in a W-CDMA/UTMS system standardized by the 3GPP (3rd Generation Partnership Project), the priority level for a call can be notified by using "Allocation/Retention Priority Level" as a signal format used for notification to the radio network controller from the switch station (for example, Non-Patent Literature 1). In addition, the priority level for a call (the order of scheduling) can be notified by using "MAC-hs Scheduling Priority Indicator" as a signal format from the radio network controller to the radio base station (for example, Non-Patent Literature 2).

As described above, the radio resource allocation is controlled according to the priority level for a call. Thus, QoS (Quality of Service) is differentiated on a user or service basis.

However, the priority level for a call is generally set in the fixed manner based on the subscription type or the like. Thus, for example, in a case where a high priority-level call has large-volume traffic, the communication rate of a low priority-level call is decreased even though the low priority-level call has small volume traffic. Thus, fair services to users have not been provided.

### CITATION LIST

### NON-PATENT LITERATURES

Non-patent Literature 1: TS25.413 V7.9.0 "UTRAN Iu interface RANAP signalling"
Non-patent Literature 2: TS25.433 V8.1.0 "UTRAN Iub interface Node B Application Part (NBAP) signalling"

### SUMMARY OF INVENTION

A radio communication system according to a first aspect provides a first call type in which a radio resource is allocated to a call in time division and a second call type in which the radio resource is allocated according to a transmission rate. The radio communication system includes: a measurement unit configured to measure a usage result of the first call type and a usage result of the second call type; and a setting unit configured to set a first usage result priority level as a priority level of the first call type based on the usage result of the first call type upon receipt of the first call type and to set a second usage result priority level as a priority level of the second call type based on the usage result of the second call type upon receipt of the second call type. The first usage result priority level is applied independently of a congestion state of a radio communication section. The second usage result priority level is applied according to the congestion state of the radio communication section.

### BRIEF DESCRIPTION OF DRAWINGS

[Fig. 1] Fig. 1 is a diagram showing a radio communication system according to an embodiment.
[Fig. 2] Fig. 2 is a block diagram showing each of radio base stations 20 according to the embodiment.
[Fig. 3] Fig. 3 is a block diagram showing each of radio network controllers 30 according to the embodiment.
[Fig. 4] Fig. 4 is a block diagram showing a switch 40 according to the embodiment.
[Fig. 5] Fig. 5 is a chart showing a usage result table according to the embodiment.
[Fig. 6] Fig. 6 is a chart showing a priority level setting table according to the embodiment.
[Fig. 7] Fig. 7 is a flowchart showing an operation of the radio communication system according to the embodiment.
[Fig. 8] Fig. 8 is a flowchart showing an operation of the radio communication system according to the embodiment.
[Fig. 9] Fig. 9 is a flowchart showing an operation of the radio communication system according to the embodiment.
[Fig. 10] Fig. 10 is a flowchart showing an operation of the radio communication system according to the embodiment.

### DESCRIPTION OF EMBODIMENT

Hereinbelow, a description is given of a radio communication system according to an embodiment of the present invention with reference to the drawings. Note that, in the following description of the drawings, same or similar reference signs denote same or similar portions.

However, it should be noted that the drawings are schematic and ratios of dimensions and the like are different from actual ones. Therefore, specific dimensions and the like should be determined in consideration of the following description. Moreover, the drawings also include portions having different dimensional relationships and ratios from each other.

### [Embodiment Overview]

The embodiment relates to a radio communication system configured to provide a first call type in which a radio resource is allocated in time division and a second call type in which a radio resource is allocated according to the transmission rate.

The first call type is a call for, for example, HSDPA (High Speed Downlink Packet Access) or HSUPA (High Speed Uplink Packet Access). In the first call type, the control of radio resource allocation is the control of the order of allocating time slots to calls (the order of scheduling).

Note that a priority level of the first call type (hereinafter, a first usage result priority level) is set based on a usage result of the first call type at the time of reception of the first call type. In addition, in controlling the radio resource allocation, the first usage result priority level is applied to the first call type independently of a congestion state of a radio communication section.

The second call type is a call for, for example, R99 (Release 99). In the second call type, the control of the radio resource allocation is the control of the transmission rate (allocated transmission rate) which changes according to the radio resource allocation.

Note that the priority level of the second call type (hereinafter, a second usage result priority level) is set based on a usage result of the second call type at the time of reception of the second call type. In addition, in controlling the radio resource allocation, the second usage result priority level is applied to the second call type according to a congestion state of a radio communication section. Specifically, when the congestion state of the radio communication section is more congested than a predetermined state, the second usage result priority level is applied thereto.

As described above, the usage result of the first call type is reflected in setting the first usage result priority level in the embodiment. Specifically, the smaller an amount of the usage result of the first call type is, the higher the first usage result priority level is set. In addition, the usage result of the second call type is reflected in setting the second usage result priority level. Specifically, the smaller an amount of the usage result of the second call type is, the higher the second usage result priority level is set. In sum, since a user having a smaller amount of usage result is preferentially treated, fair services can be provided.

In addition, as for the second call type, the priority level is applied according to the congestion state of the radio communication section in controlling the radio resource allocation. Specifically, when the congestion state of the radio communication section is more congested than the predetermined state, the second usage result priority level set based on the usage result is applied. On the other hand, when the congestion state of the radio communication section is not more congested than the predetermined state, the second usage result priority level is not applied, but a constant transmission rate is allocated.

In sum, when the radio communication section is congested, a user having a smaller amount of usage result is preferentially treated, and thus fair services are provided. On the other hand, when the radio communication section is not congested, a constant transmission rate is allocated, and thus lowering user satisfaction is prevented.

### [Embodiment]

### (Radio Communication System)

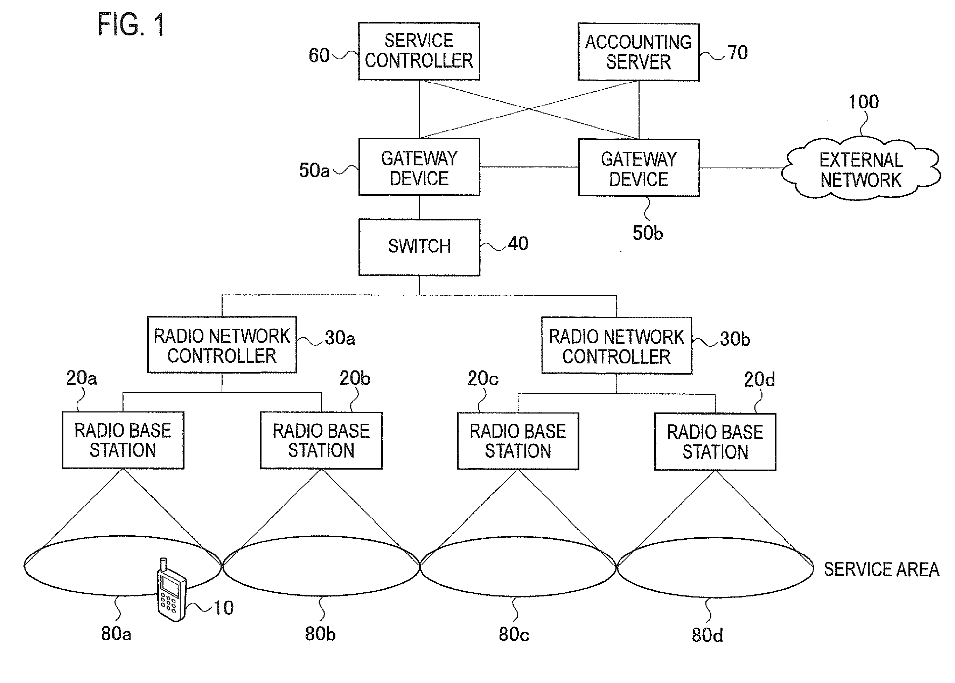

Hereinbelow, a description is given of a radio communication system according to the embodiment with reference to the drawings. Fig. 1 is a diagram showing the radio communication system according to the embodiment.

As shown in Fig. 1, the radio communication system provides services for radio terminals 10. For example, the radio communication system provides the first call type in which a radio resource is allocated in time division and the second call type in which a radio resource is allocated according to the transmission rate. In the embodiment, the first call type is a call for HSDPA and HSUPA, while the second call type is a call for R99. In addition, in the embodiment, a description is mainly given of a case where the first call type and the second call type correspond to a packet switched call.

Specifically, the radio communication system includes radio base stations 20, radio network controllers 30, a switch 40, gateways 50, a service controller 60, an accounting server 70, and an external network 100.

Each of the radio terminals 10 is a terminal such as a mobile phone, a PDA, or a note PC. The radio terminal 10 communicates with a corresponding one of the radio base stations 20 through a radio channel.

Each of the radio base stations 20 manages a corresponding one of cells 80. Specifically, the radio base stations 20 communicate with the radio terminal 10 existing in any of the cells 80 through the radio channel. In the embodiment, radio base stations 20a, 20b, 20c, and 20d are provided as the radio base stations 20. Likewise, the multiple cells 80 (cells 80a, 80b, 80c, and 80d) form a service area.

It should be noted that the radio base stations 20 communicate with the multiple radio terminals 10. The radio base stations 20 control radio resource allocation for the first call type. Specifically, the radio base stations 20 control the order of allocating time slots to calls (the order of scheduling).

It should also be noted that the radio base stations 20 each apply the first usage result priority level independently of the congestion state of the radio communication section in controlling the radio resource allocation.

Specifically, a first call type call having a higher first usage result priority level has more opportunities of being allocated for a time slot, while a first call type call having a lower first usage result priority level has less opportunities of being allocated for a time slot.

The first usage result priority level is set by an upper node (the switch 40 in the embodiment) of the radio base stations 20 as will be described later, and notified to a corresponding one of the radio base stations 20 by the upper node.

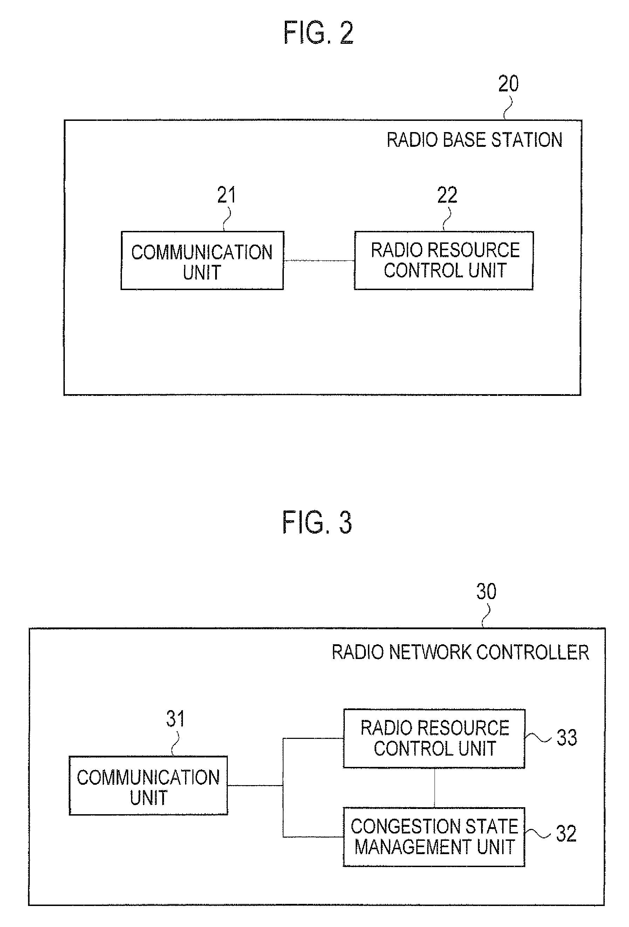

In this respect, the detail of the radio base stations 20 is described later (see Fig. 2).

Each of the radio network controllers 30 is a device configured to manage multiple corresponding ones of the radio base stations 20. In other words, the radio network controller 30 is an upper node of the radio base stations 20. The radio network controller 30 allocates a radio channel to be set between one of the radio terminals 10 and a corresponding one of the radio base stations 20. In the embodiment, a radio network controller 30a and a radio network controller 30b are provided as the radio network controllers 30.

In addition, the radio network controller 30 controls the radio resource allocation for the second call type. Specifically, the radio network controller 30 controls the transmission rate (allocated transmission rate) which changes according to the radio resource allocation.

It should be noted that the radio network controller 30 applies the second usage result priority level according to the congestion state of the radio communication section in controlling the radio resource allocation.

Meanwhile, a radio resource corresponding to a high allocated transmission rate (for example, 64 kbps) is allocated to a call of the second call type having a higher second usage result priority level, while a radio resource corresponding to a low allocated transmission rate (for example, 32 kbps) is allocated to a call of the second call type having a low second usage result priority level.

The second usage result priority level is set by the upper node (the switch 40 in the embodiment) of the radio network controllers 30 as will be described later, and notified to a corresponding one of the radio network controllers 30 by the upper node.

In this respect, the detail of the radio network controllers 30 is described later (see Fig. 3).

The switch 40 is a device configured to manage the multiple radio network controllers 30. That is, the switch 40 is the upper node of the radio base stations 20. The switch 40 is formed by an SGSN (Serving GPRS Support Node) serving a switch for a packet switched call, an MSC (Mobile Switching Center) serving as a switch for a circuit switched call, or the like.

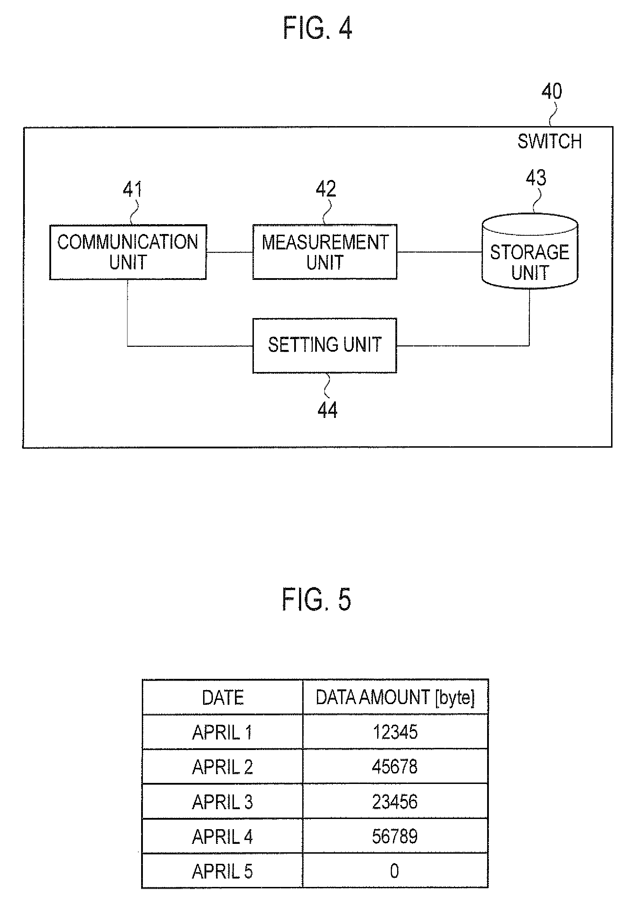

In this respect, the detail of the switch 40 is described later (see Fig. 4).

The gateways 50 are devices configured to connect their network and another network with each other. That is, the gateways 50 are upper nodes of the radio base stations 20. Each of the gateways 50 is formed by a GGSN (Gateway GPRS Support Node) serving as a gateway for a packet switched call, a GMSC (Gateway Mobile Switching Center) serving as a gateway for a circuit switched call, or the like.

In the embodiment, a gateway 50a and a gateway 50b are provided as the gateways 50. Note that the gateway 50a is a device provided in the network including the radio base stations 20, the radio network controllers 30, and the switch 40, while the gateway 50b is a device provided in the external network 100.

The service controller 60 is connected to the gateways 50. The service controller 60 is a device configured to control services (packet switched calls and circuit switched calls) provided for the radio terminal 10. Note that the service controller 60 is considered to be an upper node of the radio base stations 20.

The accounting server 70 is connected to the gateways 50 and is a server for accounting of services (packet switched calls and circuit switched calls) provided for each of the radio terminals 10. Note that the accounting server 70 is considered to be an upper node of the radio base stations 20.

The external network 100 is a network provided by another communication operator or a public network represented by the Internet network or the like.

Specifically, signalling between each of the radio base stations 20 and a corresponding one of the radio network controllers 30 is specified in, for example, TS25.433 V8.1.0 "UTRAN Iub interface Node B Application Part (NBAP) signalling." In addition, signalling between each of the radio network controllers 30 and the switch 40 is specified in, for example, TS25.413 V7.9.0 "UTRAN Iu interface RANAP signalling."

### (Radio Base Station)

Hereinbelow, a description is given of the radio base stations according to the embodiment with reference the drawings. Fig. 2 is a block diagram showing each of the radio base stations 20 according to the embodiment.

As shown in Fig. 2, the radio base station 20 includes a communication unit 21 and a radio resource control unit 22.

The communication unit 21 communicates with the radio terminal 10. The communication unit 21 also communicates with the radio network controller 30.

For example, as "MAC-hs Scheduling Priority Indicator," the communication unit 21 acquires the first usage result priority level set by the switch 40, from the corresponding radio network controller 30 (see TS25.433 V8.1.0, for example).

The radio resource control unit 22 controls the radio resource allocation for the first call type. Specifically, the radio resource control unit 22 controls the order of allocating time slots to calls (the order of scheduling) based on the first usage result priority level.

In this respect, a first call type call having a higher first usage result priority level has more opportunities of being allocated for a time slot, while a first call type call having a lower first usage result priority level has less opportunities of being allocated for a time slot.

Note that the first usage result priority level is notified to the radio base station 20 from the radio network controller 30 independently of the congestion state of the radio communication section. In addition, it should be noted that the radio resource control unit 22 applies the first usage result priority level set by the switch 40, independently of the congestion state of the radio communication section.

### (Radio network controller)

Hereinbelow, a description is given of the radio network controllers according to the embodiment with reference to the drawings. Fig. 3 is a block diagram showing each of the radio network controllers 30 according to the embodiment.

As shown in Fig. 3, the radio network controller 30 includes a communication unit 31, a congestion state management unit 32, and a radio resource control unit 33.

The communication unit 31 communicates with the radio base station 20. The communication unit 31 also communicates with the switch 40.

For example, as "Allocation/Retention Priority Level" of "RAB Parameter," the communication unit 31 acquires the first usage result priority level and the second usage result priority level which are set by the switch 40, from the switch 40 (see TS25.413 V7.9.0, for example).

In addition, as "MAC-hs Scheduling Priority Indicator," the communication unit 31 notifies the radio base station 20 of the first usage result priority level set by the switch 40 (see TS25.433 V8.1.0, for example). At this time, "Allocation/Retention Priority Level" is converted into "MAC-hs Scheduling Priority Indicator."

The congestion state management unit 32 manages the congestion state of the radio communication section. The radio communication section is a section, for example, between the radio terminal 10 and the corresponding radio network controller 30.

The congestion state of the radio communication section is judged based on an amount of transmission power of the radio base station 20, an amount of reception power of the radio base station 20, an amount of transmission buffer of the radio base station 20, an amount of reception buffer of the radio base station 20, or the like.

The radio resource control unit 33 controls the radio resource allocation for the second call type. Specifically, the radio resource control unit 33 controls the transmission rate (allocated transmission rate) which changes according to the radio resource allocation.

Meanwhile, the radio resource control unit 33 judges whether or not to apply the second usage result priority level notified by the switch 40, based on the congestion state of the radio communication section. When the congestion state of the radio communication section is more congested than a predetermined state, the radio resource control unit 33 applies the second usage result priority level in controlling the radio resource allocation. On the other hand, when the congestion state of the radio communication section is not more congested than the predetermined state, the radio resource control unit 33 does not apply the second usage result priority level in controlling the radio resource allocation, but allocates the constant transmission rate.

### (Upper Node)

Hereinbelow, a description is given of the upper node according to the embodiment with reference to the drawings. Fig. 4 is a block diagram showing the upper node according to the embodiment. The embodiment exemplifies the switch 40 as an example of the upper node.

As shown in Fig. 4, the switch 40 includes a communication unit 41, a measurement unit 42, a storage unit 43, and a setting unit 44.

The communication unit 41 communicates with the radio network controllers 30. The communication unit 41 also communicates with one of the gateways 50. For example, as "Allocation/Retention Priority Level" of "RAB Parameter," the communication unit 41 notifies a corresponding one of the radio network controllers 30 of the first usage result priority level and the second usage result priority level which are set by the setting unit 44 to be described later (see TS25.413 V7.9.0, for example).

The measurement unit 42 measures usage results of the first call type and the second call type. Specifically, the measurement unit 42 measures traffic between the start of the first call type and the termination of the first call type as the usage result. Likewise, the measurement unit 42 measures traffic between the start of the second call type and the termination of the second call type as the usage result.

An amount of data of packets transmitted and received by the radio terminal 10 in the first call type or the second call type is herein exemplified as the usage result (traffic).

The storage unit 43 stores various data. Specifically, the storage unit 43 stores a usage result table for each user. The storage unit 43 also stores a priority level setting table.

The usage result table is a table for managing a usage result of the first call type (or the second call type), as shown in Fig. 5. Specifically, the usage result table associates "date" with "data amount [byte]". The "date" indicates a date when the first call type (or the second call type) is set. The "data amount [byte]" is an amount of data of packets transmitted and received by the radio terminal 10 in the first call type (or the second call type).

Note that communication time is managed on a date basis in the embodiment, but is not limited to this. The communication time may be managed in a unit other than the date (for example, two-hour unit), as long as an accumulated value of the data amount in a predetermined period can be managed. The communication time may also be managed based on an accumulated time in a predetermined period up to the current time.

Meanwhile, the usage result table may include a table for managing the usage result of the first call type and a table for managing the usage result of the second call type. The usage result table may also be a table for managing a total amount of the result of the usage result of the first call type and the usage result of the second call type.

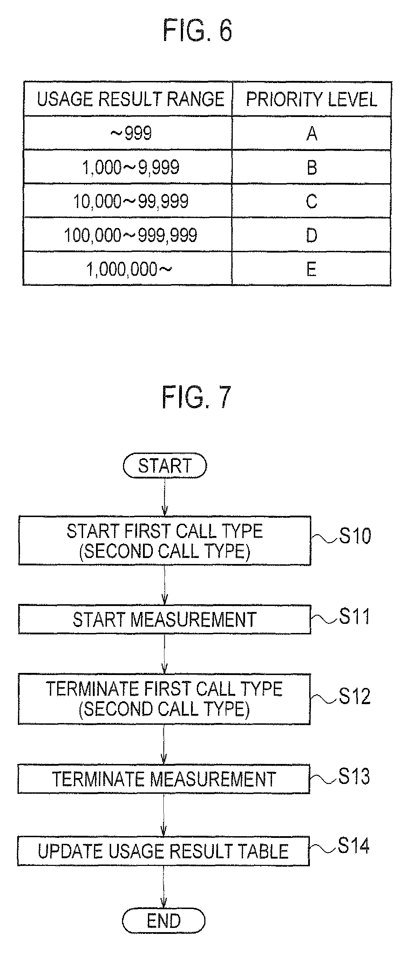

As shown in Fig. 6, the priority level setting table is a table for defining the first usage result priority levels (or the second usage result priority levels). Specifically, the priority level setting table associates "usage result ranges" with "priority levels". The "usage result ranges" indicate ranges to be compared with the usage result of the first call type (or the second call type). The "priority levels" indicate the first usage result priority levels (or the second usage result priority levels) associated with the usage result ranges.

It should be noted that the priority levels are set herein from the highest in the order from A to E. In other words, "A" has the highest priority level, and "E" has the lowest priority level. As described above, the smaller the data amount in the usage result of the first call type (or the second call type) is, the higher the first usage result priority level (or the second usage result priority level) is.

Meanwhile, the priority level setting table may include a table for defining the first usage result priority levels and a table for defining the second usage result priority levels. In addition, the usage result table may be a table common to the first usage result priority levels and the second usage result priority levels.

The setting unit 44 sets a corresponding one of the first usage result priority levels (or the second usage result priority levels). Specifically, the setting unit 44 sets the first usage result priority level (or the second usage result priority level) based on the usage result of the first call type (or the second call type).

Firstly, the setting unit 44 acquires the usage result of the first call type (or the second call type) by referring to the usage result table. For example, a case is exemplified where the current date is "April 5," and where the predetermined period is "three days including the current day." The setting unit 44 refers to the usage result table shown in Fig. 5 and thereby acquires "23,456 + 56,789 + 0 = 80,245" which is an accumulated value of the communication time in a period from April 3 to April 5.

Secondly, the setting unit 44 refers to the priority level setting table and thereby compares the usage result of the first call type (or the second call type) with the usage result ranges. Subsequently, the setting unit 44 sets a priority level associated with one of the usage result ranges which includes the usage result, as the first usage result priority level (or the second usage result priority level). For example, a case is exemplified here where the usage result is "80,245." The setting unit 44 refers to the priority level setting table shown in Fig. 6, thereby identifies the usage result range "10,000 to 99,999" including the usage result "80,245," and then sets a priority level "C" associated with the usage result range "10,000 to 99,999," as the first usage result priority level (or the second usage result priority level).

Here, the setting unit 44 sets the first usage result priority level based on the usage result of the first call type. Likewise, the setting unit 44 sets the second usage result priority level based on the usage result of the second call type.

However, the setting unit 44 may set the first usage result priority level based on a total result of the first call type and the second call type. Likewise, the setting unit 44 may set the second usage result priority level based on the total amount of the results of the first call type and the second call type.

### (Operation of Radio Communication System)

Hereinbelow, a description is given of an operation of the radio communication system according to the embodiment with reference to the drawings. Fig. 7 to Fig. 10 are flowcharts showing operations of the radio communication system according to the embodiment. Note that the embodiment exemplifies operations of the switch 40.

Firstly, with reference to Fig. 7, a description is given of an operation of updating the usage result table by the switch 40.

As shown in Fig. 7, in Step 10, the switch 40 detects the start of the first call type (or the second call type).

In Step 11, the switch 40 starts measurement of a usage result (data amount) of the first call type (or the second call type).

In Step 12, the switch 40 detects the termination of the first call type (or the second call type).

In Step 13, the switch 40 terminates the measurement of the usage result (data amount) of the first call type (or the second call type).

In Step 14, the switch 40 updates the usage result table. The switch 40 adds the usage result (data amount) of the first call type (or the second call type) measured between Step 11 and Step 13, to the usage result table.

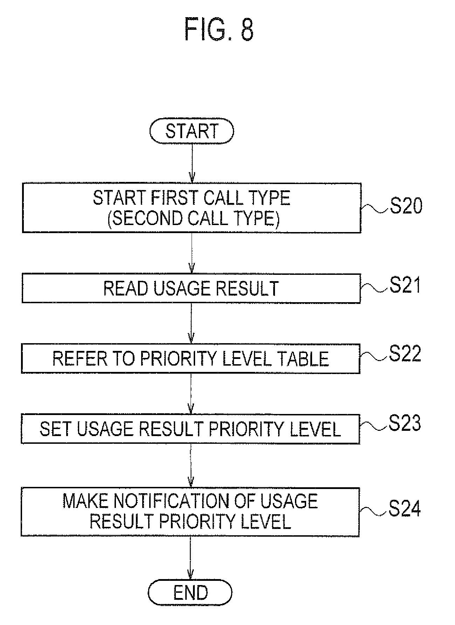

Secondly, with reference to Fig. 8, a description is given of an operation of setting the priority level of the first usage result priority level (or the second usage result priority level) by the switch 40.

As shown in Fig. 8, in Step 20, the switch 40 detects the start of the first call type (or the second call type).

In Step 21, the switch 40 refers to the usage result table and thereby acquires the usage result of the first call type (or the second call type).

In Step 22, the switch 40 refers to the priority level setting table and thereby compares the usage result of the first call type (or the second call type) with the usage result ranges.

In Step 23, the switch 40 sets the priority level associated with the usage result range including the usage result, as the first usage result priority level (or the second usage result priority level).

In Step 24, the switch 40 notifies the corresponding radio network controller 30 of the first usage result priority level (or the second usage result priority level).

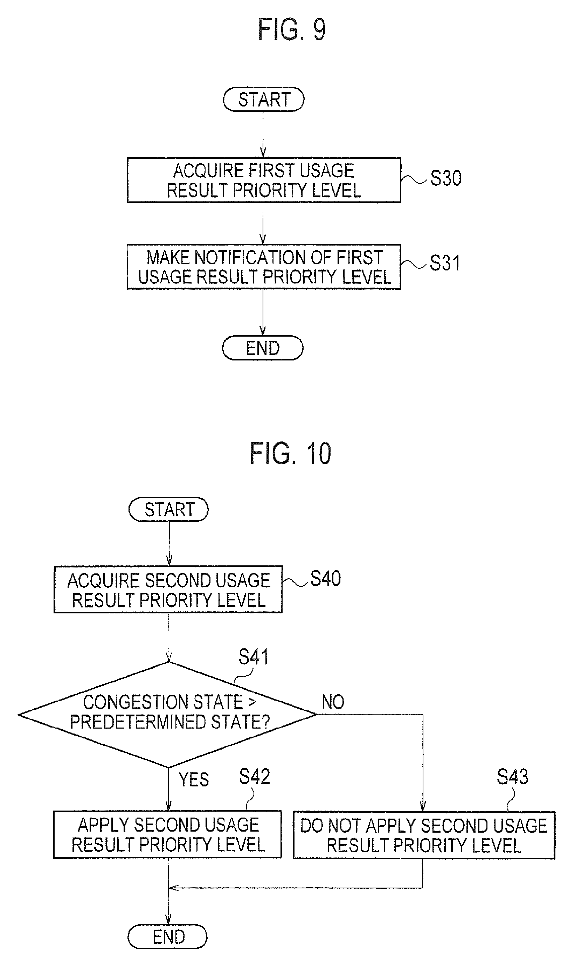

Thirdly, with reference to Fig. 9, a description is given of an operation of starting the first call type by the radio network controller 30.

As shown in Fig. 9, in Step 30, the radio network controller 30 acquires the first usage result priority level from the switch 40.

In Step 31, the radio network controller 30 transmits the first usage result priority level to a corresponding one of the radio base stations 20.

Note that the radio base station 20 manages the order of allocating time slots to calls of the first call type (the order or scheduling) based on the first usage result priority level, as described above.

Fourthly, with reference to Fig. 10, a description is given of an operation of starting the second call type by the radio network controller 30.

As shown in Fig. 10, in Step 40, the radio network controller 30 acquires the second usage result priority level.

In Step 41, the radio network controller 30 judges whether or not the congestion state of the radio communication section is more congested than a predetermined state. If the congestion state of the radio communication section is more congested than the predetermined state, the radio network controller 30 moves on processing Step 42. On the other hand, if the congestion state of the radio communication section is not more congested than the predetermined state, the radio network controller 30 moves on processing Step 43.

In Step 42, the radio network controller 30 applies the second usage result priority level to the second call type. Specifically, based on the second usage result priority level, the radio network controller 30 controls the transmission rate (allocated transmission rate) which changes according to the radio resource allocation.

In Step 43, the radio network controller 30 does not apply the second usage result priority level, but allocates the constant transmission rate to the radio terminal 10.

### (Operations and Effects)

In the embodiment, the setting unit 44 of the switch 40 sets the first usage result priority level based on the usage result of the first call type. Specifically, the setting unit 44 sets a higher first usage result priority level for a smaller amount of usage result of the first call type. In addition, the setting unit 44 sets the second usage result priority level based on the usage result of the second call type. Specifically, the setting unit 44 sets a higher second usage result priority level for a smaller amount of usage result of the second call type. In sum, since a user having a smaller amount of usage result is preferentially treated, fair service can be provided.

In addition, the radio resource control unit 33 of the radio network controller 30 applies the second usage result priority level to the second call type according to the congestion state of the radio communication section, in controlling the radio resource allocation. Specifically, when the congestion state of the radio communication section is more congested than the predetermined state, the radio resource control unit 33 applies the second usage result priority level set based on the usage result. On the other hand, when the congestion state of the radio communication section is not more congested than the predetermined state, the radio resource control unit 33 does not apply the second usage result priority level, but allocates the constant transmission rate.

In sum, when the radio communication section is congested, a user having a smaller amount of usage result is preferentially treated, and thus fair services are provided. On the other hand, when the radio communication section is not congested, the constant transmission rate is allocated, and thus lowering user satisfaction is prevented.

### [Other Embodiment]

The present invention has been described by using the embodiment described above. However, it should not be understood that the description and drawings which constitute part of this disclosure limit the invention. From this disclosure, various alternative embodiments, examples, and operation techniques will be easily found by those skilled in the art.

In the embodiment, the switch 40 measures the usage result, stores the usage result, and sets the priority level; however, the embodiment is not limited to this. Specifically, an upper node other than the switch 40 may measure the usage result, store the usage result, and set the priority level. Moreover, the aforementioned functions of the measurement unit 42, the storage unit 43, and the setting unit 44 may be provided to different upper nodes, respectively.

Although not being particularly referred to in the embodiment described above, a priority level (hereinafter, a priority level class) may be set according to a subscription type (for example, a fee such as a basic fee).

In such a case, the first usage result priority level may be set by modifying the priority level class based on the usage result of the first call type. Likewise, the second usage result priority level may be set by modifying the priority level class based on the usage result of the second call type.

Alternatively, priority level classes may be provided by being divided into multiple detailed category classes, and a corresponding one of the detailed category classes may be changed based on the usage result of the first call type (or the second call type) without changing the priority level class. In other words, one of the detailed category classes changed based on the usage result of the first call type is used as the first usage result priority level. Likewise, one of detailed category classes changed based on the usage result of the second call type is used as the second usage result priority level.

In the embodiment, the usage result of the first call type is the data amount of the communication performed by using the first call type in the predetermined period; however, the embodiment is not limited to this. Specifically, the usage result of the first call type may be an average transmission rate of communication performed by using the first call type in the predetermined period.

Likewise, the usage result of the second call type is the data amount of the communication performed by using the second call type in the predetermined period; however, the embodiment is not limited to this. Specifically, the usage result of the second call type may be an average transmission rate of communication performed by using the second call type in the predetermined period.

In such a case, the lower an average transmission rate is, the higher the first usage result priority level (or the second usage result priority level) is set.

In the embodiment, the description has been mainly given of the case where the first call type and the second call type are packet switched calls. However, the first call type and the second call type may be circuit switched calls. In such a case, the usage results of the first call type and the second call type may be a length of time during which circuit switched calls occupy a radio resource.

### INDUSTRIAL APPLICABILITY

The present invention can provide a radio communication system and an upper node which are capable of achieving provision of fair services.

## Claims

1. A radio communication system configured to provide a first call type in which a radio resource is allocated to a call in time division and a second call type in which the radio resource is allocated according to a transmission rate, the radio communication system comprising:
a measurement unit configured to measure a usage result of the first call type and a usage result of the second call type; and
a setting unit configured to set a first usage result priority level as a priority level of the first call type based on the usage result of the first call type upon receipt of the first call type and to set a second usage result priority level as a priority level of the second call type based on the usage result of the second call type upon receipt of the second call type, wherein
the first usage result priority level is applied independently of a congestion state of a radio communication section, and
the second usage result priority level is applied according to the congestion state of the radio communication section.

2. The radio communication system according to claim 1, wherein
the first usage result priority level is used for controlling the order of scheduling the first call type, and
the second usage result priority level is used for controlling an allocated transmission rate of the second call type.

3. The radio communication system according to claim 1, wherein
the usage result of the first call type is a data amount of communication performed by using the first call type in a predetermined period, and
the usage result of the second call type is a data amount of communication performed by using the second call type in the predetermined period.

4. The radio communication system according to claim 1, wherein
the usage result of the first call type is an average transmission rate of communication performed by using the first call type in a predetermined period, and
the usage result of the second call type is an average transmission rate of communication performed by using the second call type in the predetermined period.

5. An upper node of a radio base station provided in a radio communication system configured to provide a first call type in which a radio resource is allocated to a call in time division and a second call type in which the radio resource is allocated according to a transmission rate, the upper node comprising:
a measurement unit configured to measure a usage result of the first call type and a usage result of the second call type; and
a setting unit configured to set a first usage result priority level as a priority level of the first call type based on the usage result of the first call type upon receipt of the first call type and to set a second usage result priority level as a priority level of the second call type based on the usage result of the second call type upon receipt of the second call type; and
a notification unit configured to notify the radio base station of the priority level of the first call type set by the setting unit, wherein
the first usage result priority level is applied independently of a congestion state of a radio communication section, and
the second usage result priority level is applied according to the congestion state of the radio communication section.
